# EUROPÄISCHE PATENTSCHRIFT

(11) **EP 1 637 375 B1**
(45) Veröffentlichungstag und Bekanntmachung des Hinweises auf die Patenterteilung: **25.06.2008**
(21) Anmeldenummer: 05017717.9
(22) Anmeldetag: 16.08.2005
(51) Int. Cl.: B60J 7/00, B60P 1/00, B60J 7/057, B62D 33/04

(54) **Hubvorrichtung für das Dach eines Nutzfahrzeugaufbaus**
Lifting device for the roof of a commercial vehicle body
Appareil de levage pour le toit de véhicule utilitaire

(30) Priorität: 20.09.2004 DE 202004014742 U
(43) Veröffentlichungstag der Anmeldung: 22.03.2006
(73) Patentinhaber: F. HESTERBERG & SÖHNE GmbH & Co. KG, 58256 Ennepetal (DE)
(72) Erfinder: Bosch, Heiko, 58339 Breckerfeld (DE)
(74) Vertreter: Christophersen, Ulrich Rudolf

(56) Entgegenhaltungen:
- EP-A- 0 953 466
- EP-A- 1 407 912
- DE-C1- 19 842 844
- DE-U1- 29 907 916

## Beschreibung

Die Erfindung betrifft eine Vorrichtung zum Anheben und Absenken eines insbesondere über Eckrungen abgestützten Daches eines Nutzfahrzeugaufbaus.

Durch die DE-C 198 42 844 ist eine mechanische Vorrichtung zum Heben eines auf Eckrungen ruhenden Daches eines Nutzfahrzeugaufbaus bekannt geworden, mit einer am oberen Ende der Eckrunge befestigten senkrechten Führung, in der ein Hubglied mit Dachanbindung auf und ab beweglich geführt ist. Die Vorrichtung ist als Einzelantrieb zum Anbringen an einer Eckrunge ausgebildet und weist einen zwischen dem Hubglied und einer Abstützung im unteren Bereich der Runge wirkenden mechanischen Antrieb zum Auf- und Abbewegen des Hubgliedes auf. Der mechanische Antrieb kann aus einer Gewindestange und einer darauf sitzenden Mutter bestehen, die mittels einer ein Kardangelenk aufweisenden Kurbel gegeneinander verdrehbar sind. Alternativ besteht die Möglichkeit, den mechanischen Antrieb durch einen Kniehebel zu bilden, von dem ein Kniehebelglied über das Kniehebelgelenk hinaus verlängert und dort als Handhabe ausgebildet ist. Wenn das Dach zwischen beiden Extremlagen zu bewegen ist, kann die Betätigung des Kurbelantriebes belastend für die Bedienperson sein. Dies im Hinblick darauf, dass der zum Drehen und Führen der Kurbel erforderliche Kraftaufwand mit zunehmender Dauer stärker spürbar ist. Durch Einsatz eines Kniehebels wird ein relativ großer seitlicher Freiraum benötigt, der in manchen Situationen, in denen der Nutzfahrzeugaufbau zu be- oder entladen ist, nicht oder nur bedingt zur Verfügung steht.

Der gattungsgemäßen EP-A 1 407 912 ist ein Fahrzeugaufbau für Nutzfahrzeuge mit einem Dach zu entnehmen, welches sich auf Eckstützen abstützt, die an ihrem unteren Ende über einen ortsfest angebrachten Abschnitt auf einer Ladefläche gehaltert und an ihrem oberen Ende über einen auf- und abbeweglichen Abschnitt mit dem Dach verbunden sind, wobei der auf- und abbewegliche Abschnitt zumindest teilweise in dem ortsfest angebrachten Abschnitt geführt ist, mit einer Hubeinrichtung, welche einer jeden Eckstütze zur Einleitung einer Hub- oder Schwenkbewegung des auf- und abbeweglichen Abschnittes gegenüber dem ortsfest angebrachten Abschnitt zugeordnet ist, wobei der auf- und abbewegliche Abschnitt in Bezug zum ortsfest angebrachten Abschnitt der Eckstützen zu Beginn eines Hubvorgangs eine Ausgangsstellung aufweist, welche verstellbar ausgebildet ist und die Hubeinrichtung zur Einleitung einer Hub- oder Senkbewegung des auf- und abbeweglichen Abschnitts als ein die Handkraft einer Bedienperson umsetzendes Stellaggregat ausgestaltet ist. Das Stellaggregat ist hierbei als hydraulisches Stellaggregat ausgebildet, beinhaltend eine über einen Handhebel bedienbare hydraulische Handpumpe.

Ziel des Erfindungsgegenstandes ist es, einen alternativen mechanischen Antrieb zur Betätigung des Hubgliedes bereitzustellen, der zum einen einfach zu handhaben ist, preiswert hergestellt werden kann und zum anderen eine sehr platzsparende Einbausituation mit sich bringt, ohne dass die Heb- und Senkbarkeit des Hubgliedes beeinträchtigt wird. Darüber hinaus soll die Hubvorrichtung in unterschiedlichen Stellungen des Hubgliedes sicher positionierbar sein.

Diese Aufgabe ist durch die Merkmale im Kennzeichenteil des Anspruchs 1 gelöst.

Vorteilhafte Weiterbildungen des Erfindungsgegenstandes sind den Unteransprüchen zu entnehmen.

Als Dämpfungselemente können Gasdruckfedern, Hydraulikzylinder, Spanngummis oder aber mechanisch wirkende Schraubenfedern zum Einsatz gelangen.

Durch den Erfindungsgegenstand wird eine Vorrichtung zum Anheben und Absenken eines, insbesondere über Eckrungen abgestützten Daches eines Nutzfahrzeugaufbaus bereitgestellt, wobei der vorzugsweise als vertikal bewegbarer Handhebel ausgebildete mechanische Antrieb in platzsparender Weise im Bereich der Runge positionierbar ist. Da keinerlei raumgreifenden Elemente, wie z.B. Kniehebel, gegeben sind, ist gegenüber dem in der DE-C 198 42 844 dargestellten mechanischen Antrieb eine erhebliche Verbesserung hinsichtlich der Betätigung des Antriebes bei beengten Platzverhältnissen gegeben.

Bedingt durch das mit dem Handhebel in Wirkverbindung stehende Arretierelement, das vorteilhafterweise gabelförmig ausgebildet ist, kann in einem vorgebbaren Teilbereich, z.B. 50 bis 100 mm, zwischen den beiden Extremlagen des Hubgliedes eine Festlegung des Handhebels gegenüber dem mit der Führung in Wirkverbindung stehenden Dämpfungselement und demzufolge auch dem Hubglied bewirkt werden.

Die Arretiergabel kann, insbesondere über eine lösbare Schraubverbindung gegenüber dem Dämpfungselement, fixiert werden und liegt mit ihren gabelförmigen Ansätzen am Dämpfungselement selber oder an mit selbigem in Wirkverbindung stehenden Bauteilen an. Bei gelöster Schraube kann das Arretierelement zwischen den Endlagen des Schlitzes bewegt werden. Der Kraftaufwand ist gering, da das Dämpfungselement das Dachgewicht weitestgehend kompensiert.

Der im Handhebel vorgesehene Schlitz entspricht von seiner Länge her der gewünschten Hubbewegung des Hubgliedes, wobei durch Festziehen der Schraube die Arretiergabel aktiviert und eine weitere Bewegung des Hubgliedes dann nicht mehr möglich ist.

Der Erfindungsgegenstand ist anhand eines Ausführungsbeispieles in der Zeichnung dargestellt und wird wie folgt beschrieben. Es zeigen:
- Figur 1: Prinzipskizze der erfindungsgemäßen Hubvorrichtung für das Dach eines Nutzfahrzeugaufbaus samt vergrößerter Darstellung des Arretierbereiches;
- Figur 2: Teildarstellung der Hubvorrichtung gemäß Figur 1 mit Blick auf das Arretierelement sowie vergrößerter Darstellung des Arretierelementes.

Der Erfindungsgegenstand kann sich beispielsweise an der in der DE-C 198 42 844 dargestellten mechanischen Vorrichtung zum Anheben und Absenken eines auf Eckrungen ruhenden Daches eines Nutzfahrzeugaufbaus orientieren, wobei lediglich der mechanische Antrieb andersartig ausgebildet ist.

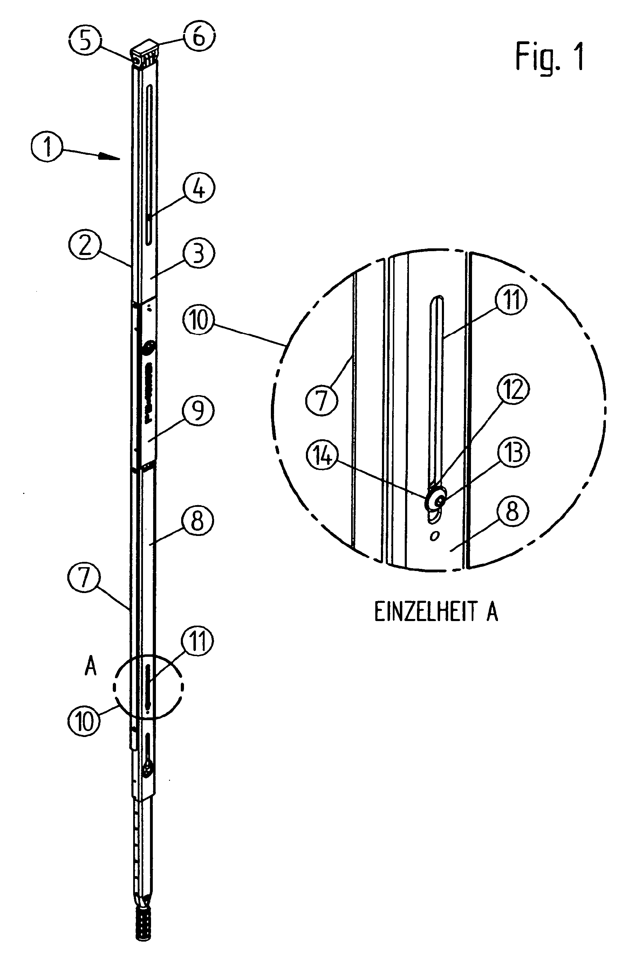

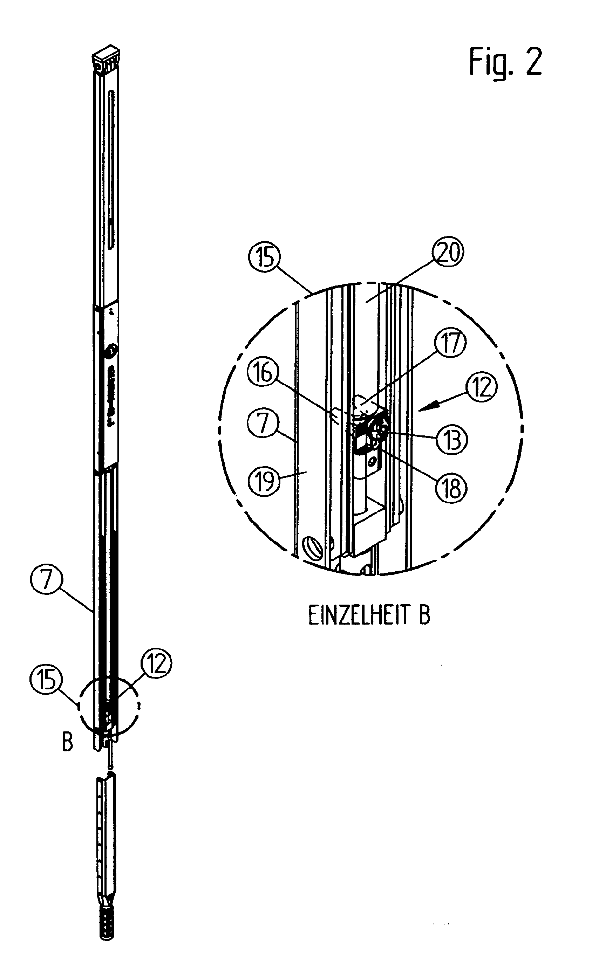

Die Ausführungsform gemäß Figur 1 besitzt eine an der nicht weiter dargestellten Runge anzuschweißende Führung 1, die als Führungskanal ausgebildet ist und aus einem U-Profil 2 sowie einer damit in Wirkverbindung stehenden Abdeckplatte 3 besteht. Alternativ kann die Führung 1 auch durch einen kastenförmigen Querschnitt gebildet werden. In diesem Führungskanal 2 ist ein Hubglied 4 geführt, das an seiner Oberseite über eine Achse 5 an einer üblichen Dachanbindung 6 angelenkt ist. Das hier nicht erkennbare in Figur 2 näher beschriebene Dämpfungselement kann analog zur DE-C 198 42 844 durch eine Gasdruckfeder gebildet sein. Unterhalb der Führung 2 ist eine, im Querschnitt C- oder U-förmig ausgebildete Verlängerung 7 vorgesehen, innerhalb welcher ein im Querschnitt U-förmig ausgebildeter Handhebel 8 bewegbar ist. Der Handhebel 8 kann mittel- oder unmittelbar mit dem Hubglied 4 in Wirkverbindung stehen (nicht dargestellt). Bedarfsweise kann ein weiteres Abdeckelement 9 vorgesehen werden, das sich als Träger eines Firmenlogos eignet und die darunter liegenden beweglichen Bauteile verdeckt, so dass diese für die Bedienperson nicht erreichbar sind und die Bedienperson somit nicht an der Hand bzw. den Fingern verletzt werden kann. Die Umrandung 10 zeigt einen im Bereich des Handhebels 8 vorgesehenen Arretierbereich. Dargestellt ist ein Schlitz 11, der als Einzelheit A vergrößert dargestellt ist. Hier erkennbar ist der Handhebel 8, der mit einem nur angedeuteten in Figur 2 näher beschriebenen Arretierelement 12 in Wirkverbindung steht, das über eine lösbare Verbindung, hier eine Schraube 13 samt Scheibe 14, gegenüber dem Dämpfungselement fixierbar ist. Die Länge des Schlitzes 11 entspricht einem vorgebbaren Anteil der Hubhöhe des Hubgliedes 4, hier 80 mm. Bei gelöstem Arretierelement 12 kann der Handhebel 8 zum Heben und Senken des Hubgliedes 4 entlang des Schlitzes 11 bewegt und in jeder beliebigen Hubposition durch Festziehen der Schraube 13 festgelegt werden.

Figur 2 zeigt einen Blick in die Verlängerung 7, wobei der Handhebel hier nicht dargestellt ist. Das Arretierelement 12 ist im umrundeten Bereich 15 erkennbar und als Einzelheit B vergrößert dargestellt. Das Arretierelement 12 ist als Arretiergabel ausgebildet und beinhaltet zwei Stützfüße 16,17 sowie einen verdickten Bereich 18, in welchen die Schraube 13 einbringbar ist. Die Stützfüße 16,17 weisen in diesem Beispiel in Richtung des gegenüberliegenden Schenkels 19 der Verlängerung 7. Das Arretierelement 12 befindet sich im Einbauzustand in Anlage am Dämpfungselement 20 und ist somit nur mittelbar zugänglich, nämlich über die Schraube 13. Das Dämpfungselement 20 stützt sich somit auf den Stützfüßen 16,17 ab.

Infolge der Kraft des Dämpfungselementes 20, dessen Funktion in der DE-C 198 42 844, hinreichend beschrieben ist, wird die durch das anzuhebende/abzusenkende Dach eines Nutfahrzeugaufbaus ausgeübte Kraft weitestgehend kompensiert, so dass durch die Bedienperson ein leichtes Verschieben des Arretierelementes 12 möglich ist, wobei mit der freien Hand dann an jeder beliebigen Position des vorgegebenen Hubweges eine Festlegung des Arretierelementes 12 gegenüber dem Dämpfungselement 20 möglich ist. Die Handhabung der Hubvorrichtung ist simpel, wobei letztere sehr raumsparend rungenseitig vorgesehen werden kann.

### Bezugszeichenliste

- 1: Führung
- 2: Führungskanal
- 3: Abdeckplatte
- 4: Hubglied
- 5: Achse
- 6: Dachanbindung
- 7: Verlängerung
- 8: Handhebel
- 9: Abdeckelement
- 10: Umrandung
- 11: Schlitz
- 12: Arretierelement
- 13: Schraube
- 14: Scheibe
- 15: umrundeter Bereich
- 16: Stützfuß
- 17: Stützfuß
- 18: verdickter Bereich
- 19: Schenkel
- 20: Dämpfungselement

## Patentansprüche

1. Vorrichtung zum Anheben und Absenken eines, insbesondere über Eckrungen abgestützten Daches eines Nutzfahrzeugaufbaus mit einer im oberen Rungenbereich angeordneten Führung (2), in der ein Hubglied (4) mit Dachanbindung (6) auf und ab beweglich geführt ist, einer sich an die Führung (2) anschließenden Verlängerung (7), einem Dämpfungselement (20), das zwischen dem Hubglied (4) und der Verlängerung (7) vorgesehen ist sowie einem im unteren Bereich der Verlängerung (7) angeordneten, in vertikaler Richtung betätigbaren, mechanischen Antrieb (8), der mittel- oder unmittelbar mit dem Hubglied (4) verbunden ist, **dadurch gekennzeichnet, dass** das Hubglied (4) in unterschiedlichen Hubstellungen durch Arretierung des mechanischen Antriebes (8) dergestalt festlegbar ist, dass handhebelseitig mindestens ein sich in vertikaler Richtung erstreckender Schlitz (11) vorgebbarer Länge vorgesehen ist, innerhalb dessen ein Arretierelement (12), das Dämpfungselement (20) abstützend, zwischen den Endlagen des Schlitzes (11) führbar und an vorgebbaren Hubpositionen festlegbar ist.

2. Vorrichtung nach Anspruch 1, **dadurch gekennzeichnet, dass** der mechanische Antrieb (8) durch einen Handhebel gebildet ist, der einen U-förmigen Querschnitt aufweist, dass der Handhebel (8) innerhalb der U- oder C-förmig ausgebildeten Verlängerung (7), mit selbiger einen geschlossenen Körper bildend, geführt ist, und dass im Bereich des Handhebels (8) ein zustellbares Arretierelement (12) vorgesehen ist.

3. Vorrichtung nach Anspruch 1 oder 2, **dadurch gekennzeichnet, dass** das Arretierelement (12) gabelartig ausgebildet ist und über eine lösbare Verbindung (13) gegenüber dem Dämpfungselement (20), respektive damit zusammenwirkenden Bauteilen, festlegbar ist.

4. Vorrichtung nach einem der Ansprüche 1 bis 3, **dadurch gekennzeichnet, dass** die lösbare Verbindung (13) durch mindestens eine Schraube gebildet ist, die von außen durch den Schlitz (11) in einen handhebelseitig vorgesehenen verdickten Bereich (18) der Arretiergabel (12) einbringbar ist.

5. Vorrichtung nach einem der Ansprüche 1 bis 4, **dadurch gekennzeichnet, dass** die gabelartigen Ansätze (16,17) der Arretiergabel (12) das Dämpfungselement (20) zwischen sich aufnehmen, wobei bei gelöster Verbindung (13) eine Verschiebung des Arretierelementes in das Hubglied (4) anhebender oder absenkender Weise herbeiführbar und bei festgezogener Verbindung (13) eine Verschiebung des Hubgliedes verhindert ist.

## Claims

1. Device for raising and lowering a roof, in particular supported via corner stanchions, of a commercial vehicle body, with a guide (2) which is arranged in the upper stanchion region and in which a lifting element (4) with a roof connection (6) is guided such that it is movable up and down, an extension (7) which adjoins the guide (2), a damping element (20) which is provided between the lifting element (4) and the extension (7), and a mechanical drive (8) which is arranged in the lower region of the extension (7), can be actuated in the vertical direction and is connected indirectly or directly to the lifting element (4), **characterized in that** the lifting element (4) can be fixed in different lifting positions by locking of the mechanical drive (8) in such a manner that, on the hand-lever side, at least one slot (11) which extends in the vertical direction and is of predeterminable length is provided, within which a locking element (12), supporting the damping element (20), can be guided between the end positions of the slot (11) and can be fixed at predeterminable lifting positions.

2. Device according to Claim 1, **characterized in that** the mechanical drive (8) is formed by a hand lever which has a U-shaped cross section, **in that** the hand lever (8) is guided within the extension (7) of U- or C-shaped design, in a manner forming a closed body with the same, and **in that** an adjustable locking element (12) is provided in the region of the hand lever (8).

3. Device according to Claim 1 or 2, **characterized in that** the locking element (12) is of a fork-like design and can be fixed in relation to the damping element (20), or components interacting therewith, via a releasable connection (13).

4. Device according to one of Claims 1 to 3, **characterized in that** the releasable connection (13) is formed by at least one screw which can be placed from the outside through the slot (11) into a thickened region (18), provided on the hand-lever side, of the locking fork (12).

5. Device according to one of Claims 1 to 4, **characterized in that** the fork-like lugs (16, 17) of the locking fork (12) accommodate the damping element (20) between them, with, when the connection (13) is released, a displacement of the locking element in a manner raising or lowering the lifting element (4) being able to be brought about, and, when the connection (13) is tightened, a displacement of the lifting element being prevented.

## Revendications

1. Dispositif pour le relèvement et l'abaissement d'un toit, notamment soutenu par des ranchers corniers, d'un véhicule utilitaire, comportant une glissière (2) disposée dans la partie supérieure de rancher, où est guidé de manière à pouvoir coulisser vers le haut et vers le bas un organe de levage (4) avec un raccord au toit (6), une rallonge (7) adjacente à la glissière (2), un élément d'amortissement (20) prévu entre l'organe de levage (4) et la rallonge (7), ainsi qu'un entraînement mécanique (8) disposé dans la zone inférieure de la rallonge (7), actionnable en direction verticale, directement ou indirectement relié à l'organe de levage (4), **caractérisé en ce que** l'organe de levage (4) est blocable dans différentes positions de levage par fixation de l'entraînement mécanique (8), de telle manière qu'au moins une fente (11) de longueur déterminée s'étendant en direction verticale soit prévue du côté du levier à main, à l'intérieur de laquelle un élément de fixation (12) soutenant l'élément d'amortissement (20) peut coulisser entre les positions finales de la fente (11) et être bloqué dans des positions de levage déterminées.

2. Dispositif selon la revendication 1, **caractérisé en ce que** l'entraînement mécanique (8) est formé par un levier à main présentant une section transversale en forme de U, **en ce que** le levier à main (8) est coulissé à l'intérieur de la rallonge (7) en forme de U ou de C, en formant un corps fermé avec celle-ci, et **en ce qu'**un élément de fixation (12) réglable est prévu au niveau du levier à main (8).

3. Dispositif selon la revendication 1 ou 2, **caractérisé en ce que** l'élément de fixation (12) est réalisé en forme de fourche et est blocable par un raccord amovible (13) relativement à l'élément d'amortissement (20), ou à des pièces coopérant avec celui-ci.

4. Dispositif selon l'une des revendications 1 à 3, **caractérisé en ce que** le raccord amovible (13) est formé par au moins une vis insérable par la fente (11) dans une zone épaissie (18) de la fourche de fixation (12), prévue du côté du levier à main.

5. Dispositif selon l'une des revendications 1 à 4, **caractérisé en ce que** l'élément d'amortissement (20) est logé entre les épaulements (16, 17) en forme de fourche de la fourche de fixation (12), un coulissement de relèvement et d'abaissement de l'élément de fixation dans l'organe de levage (4) pouvant être déclenché si le raccord (13) est desserré, et un coulissement de l'organe de levage (4) étant empêché si le raccord (13) est serré.
